Europäisches Patentamt

European Patent Office

Office européen des brevets

(11) Publication number: 0 306 886
A2

# EUROPEAN PATENT APPLICATION

(21) Application number: 88114477.8

(22) Date of filing: 05.09.88

(51) Int. Cl.⁴: G06F 15/16 , G06F 13/26

(30) Priority: 11.09.87 US 95961

(43) Date of publication of application:
15.03.89 Bulletin 89/11

(84) Designated Contracting States:
DE FR GB

(71) Applicant: International Business Machines
Corporation
Old Orchard Road
Armonk, N.Y. 10504(US)

(72) Inventor: Perry, Kenneth Jay
3901 Independence Ave. Apt. 3J
Bronx, N.Y. 10463(US)
Inventor: Thefaine, Jean-Georges Jannick
336 Wolcott Avenue
Beacon New York 12508(US)
Inventor: Hailpern, Brent Tzion
26 The Terrace
Katonah New York 10536(US)
Inventor: Hoevel, Lee Windsor
9108 Woodstream Lane
Spring Valley Ohio 45370(US)
Inventor: Huynh, Tien
10B Scarborough Lane
Wappingers Falls New York 12590(US)

(74) Representative: Herzog, Friedrich Joachim,
Dipl.-Ing.
IBM Deutschland GmbH Schönaicher
Strasse 220
D-7030 Böblingen(DE)

(54) Apparatus for in band connection establishment in multiple multi-drop networks.

(57) An apparatus for establishing connections between processors in a distributed system of processors connected by a multiple multi-drop network. A
recognition circuit is associated with each processor
in the network and monitors the receive lines from
the network for the appearance of a message from
another processor, demanding the attention of the
associated processor. Monitoring of all lines is done
in parallel. No wires are needed in addition to those
already present in the network nor is any interven-
tion required on the part of the processors in the
network.

FIG. 2

## APPARATUS FOR IN BAND CONNECTION ESTABLISHMENT IN MULTIPLE MULTI-DROP NETWORKS

The subject invention pertains in general to the field of data processing and in particular to an apparatus for establishing connections between processors in a distributed system of processors connected by a multiple multi-drop network in which no wires are needed in addition to those already present in the existing network nor any processor intervention required.

A number of processor interconnect systems are known in the art, each having certain advantages and disadvantages. Such systems generally include a central control or a separate control and data paths between the respective processors.

In applicant's co-pending European patent application 0 270 882 A2 assigned to the assignee of the present invention, a method is disclosed that solves the problem of establishing connections between processors in a distributed system of processors connected by a multiple multi-drop network using no wires in addition to those already present in the multiple multi-drop network. The method requires, however, intervention by the processors, which introduces delays in establishing connections. The delays are proportional to the number of processors in the network. The present invention does not require intervention by the processor but instead relies upon hardware that avoids the necessity for intervention by the processor.

In U.S. Patent 4,434,463 to Quinquis et al, a processor to processor interconnection system is disclosed that uses multiple busses, but not individual multi-drop transmit lines for each processor. Further, Quinquis doesn't allow each processor to directly communicate with all others. Rather, some messages must be relayed through intermediate processors. In contrast thereto, a multiple multi-drop network allows direct communication between all processors.

U.S. Patent 4,491,915 to Forquer et al, discloses a processor to memory interconnection for multiple processors rather than a processor to processor interconnection system. Further, a central control means is required, as there is no distributed control.

In U.S. Patent 3,984,819 to Anderson a multiple bus processor in which each processor is not connected to the others is described. Therefore, Anderson is subject to contention which is avoided in a multi-drop network. Furthermore, Anderson requires separate data and control paths, whereas a multi-drop network requires data lines only and has no need for separate control lines.

U.S. Patent 3,753,234 to Gilbert et al, discloses a multicomputer system with simultaneous data exchange between computers. In Gilbert et al a centralized "computational flow director" is utilized, which is a central control unit. Further, separate data and control paths are utilized.

O'Neal et al, U.S. Patent 4,156,796 describes a channel attachment interface that deals with only a single bus system whereas the present invention concerns a multiple bus or link system.

In Vrielink et al, U.S. Patent 4,482,954, a circuit for connecting a plurality of processors on a single bus is described. Vrielink et al is also concerned with the single bus however as opposed to the present invention which utilizes a multiple bus.

In Terada et al, U.S. Patent 4,447,871 an interface module to connect each of a plurality of processors to a single bus is described. Terada not only uses a single bus but also uses front end processors constructed from a CPU, a memory system etc., while the present invention seeks to avoid intervention by a processor.

In Heart et al, U.S. Patent 4,130,865 bus couplers have addressed recognition circuitry to allow inter-processor communication to be treated merely as addressing another peripheral device. Heart et al, however, utilizes a multiple bus structure that differs from known multiple multi-drop networks since there is no concrete relationship between the number of busses and the number of processors in the network. Moreover, the processors must compete for a bus in the scheme of Heart et al and this requires additional arbitration circuitry. In contrast thereto, in a multiple multi-drop network the number of busses (or transmit lines) is exactly equal to the number of processors. There is also only one transmitter permitted per bus and there is therefore no contention and no need for arbitration.

It is thus an object of the invention to provide an improved multiple processor interconnection mechanism.

It is a further object of the invention to provide an improved in band connection mechanism for a multiple multi-drop network.

It is yet another object of the invention to provide an improved in band connection mechanism for a multiple multi-drop network in which no additional wires are needed in addition to those already present in the existing network.

It is a still further object of the invention to provide an improved mechanism for establishing connections between processors in a distributed system of processors connected by a multiple multi-drop network in which no wires are needed in addition to those already present in the existing network.

It is still a further object of the invention to provide an improved mechanism for establishing connections between processors in a distributed system of processors connected by a multiple multi-drop network for n processors, wherein each processor is connected to all others by n identical multi-drop links. Links are assigned to processors on a one-to-one basis and a processor may transmit messages only on its assigned link. Processors may receive messages on any of these links, thereby enabling a given processor to communicate with all others.

It is still another object of the invention to provide an improved mechanism for establishing connections between processors in a distributed system of processors connected by a multiple multi-drop network in which no additional processor intervention or overhead is required.

This invention solves the problem of establishing connections between processors in a distributed system of processors connected by what is known as a multiple multi-drop network. The solution requires no wires in addition to those already present in a multiple multi-drop network and furthermore requires no intervention on the part of the processors in the network.

In a multiple multi-drop network connecting n processors, each processor is connected to the others by n identical multi-drop links. A multi-drop link can be considered a direct connection that carries transmissions from one processor to every other processor in the network.

The links are assigned to processors on a one-to-one basis and a processor may transmit messages only on its assigned link. Processors may receive messages on any of these links, thereby enabling a processor to communicate with all other processors.

The advantage of such a network over a single multi-drop link is that there is no contention for a shared link since each processor has its own unique transmit line. Additionally, no central control means is required for the network since a distributed control is utilized.

In accordance with an illustrative embodiment demonstrating objects and features of the present invention, there is provided an apparatus for use in a multiple multi-drop network having a distributed system of processors. A recognition circuit is used to couple the transmit lines of the multiple multi-drop network and calling code inputs to the processors. The recognition circuit provides caller and interrupt request outputs. The interrupt request outputs are coupled to the processors interrupt line. In operation the processor initializes the recognition circuit and monitors all transmittal lines in parallel. If the processor's calling code appears on any of these lines, the recognition circuit causes its interrupt request output and puts a binary representation of the line on which the calling code appeared on the caller outputs. When the processor interrupt lines are enabled the processor knows another processor wants to communicate with it. The identity of the processor is already present on the caller line thus permitting recognition of a connection request immediately after transmission of the calling code.

No wires are needed in addition to those already present in the existing network. By eliminating all additional wires, the primary impediment to building larger multiple multi-drop networks of any size is reduced.

Furthermore, no processor intervention is required by the present invention since a special circuit called the calling code recognizer is used.

The objects, features and advantages of the invention will be more apparent upon reference to the following specification and the annexed drawings.

FIG. 1 shows a multiple multi-drop network known in the prior art;

FIG. 2 shows a multiple multi-drop network utilizing the apparatus of the present invention;

FIG. 3 shows the recognition circuit used in accordance with the present invention;

FIG. 4 & 5 show the calling code recognizer of the present invention.

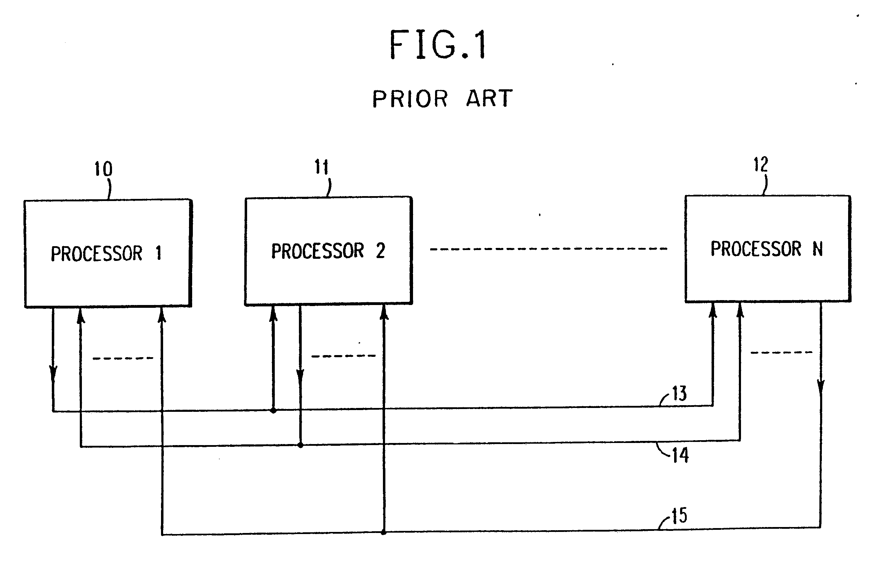

Refer now to FIG. 1 in which a multiple multi-drop network connecting n processors is shown. FIG. 1 shows a typical multiple multi-drop network. A plurality of processors 10, 11 and 12 each have a multi-drop link 13, 14 and 15, respectively, assigned to it, over which the respective processor may transmit messages. Each processor is also coupled to the multi-drop link of another processor so that it may receive messages. Therefore, for example, processor 10 may transmit messages over multi-drop link 13, but receive messages from processor 2 and processor n over multi-drop links 14 and 15 respectively. This arrangement is repeated for the remaining processors in the system.

In applicants' co-pending European patent application 0 270 882 A2 a distinguished bit pattern of length approximately log n (called a Calling Code) is assigned to each of the processors 10, 11, and 12 in the network. Each processor then monitors all the transmit lines, to detect the presence of its calling code. Once its calling code is recognized on a transmit line, the processor establishes a connection with the transmitter of the code. Therefore, the potential delay in recognizing a calling code is on the order of n (log n).

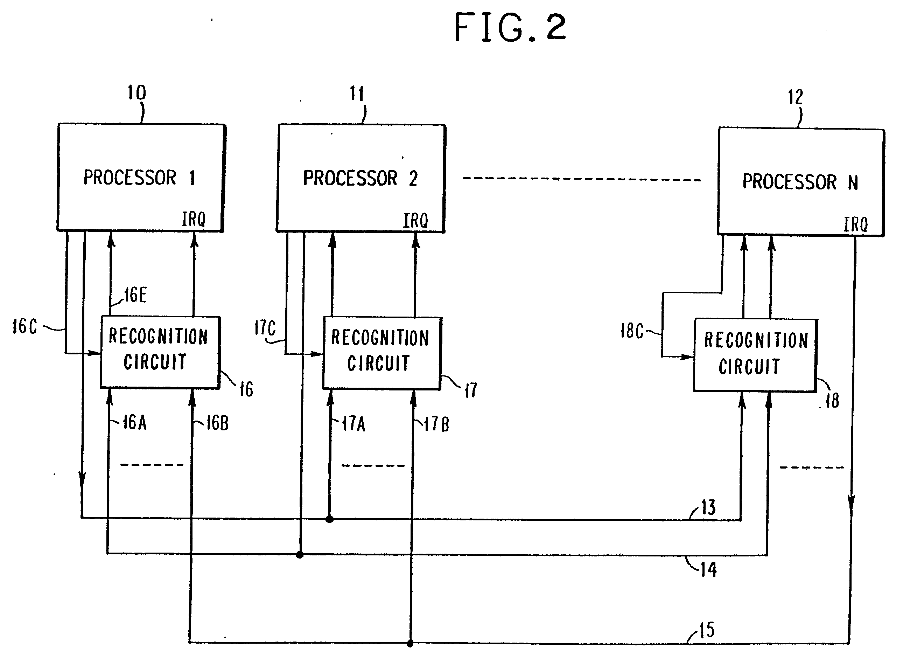

In the present invention, as shown in FIG. 2, processors 10, 11 and 12 each use a recognition circuit 16, 17 and 18 to monitor the transmit lines from the other processors in the network. The recognition circuit monitors the transmit lines in parallel, which avoids delays incurred by sampling the lines serially. The recognition circuit disclosed herein may be used in conjunction with the method disclosed in European patent application 0 270 882 A2 which is hereby incorporated by reference. By doing so, the undesirable characteristics of the method are avoided since processor intervention is no longer required and the delays are removed.

As shown in FIG. 2, a recognition circuit is required by each processor in the network. Each recognition circuit includes input terminals shown, for example,as 16A and 16B each of which is coupled to one of the end transmit lines of the multiple multi-drop network and further, a calling code input terminal from each processor shown as 16C for recognition circuit 16 of FIG. 2 and as 17C and 18C for recognition circuit 17 and 18 respectively.

The recognition circuit works as follows: the processor initializes the recognition circuit by supplying to it the processor's calling code on, for example, lines 16C, 17C and 18C. The calling code is generally a binary number the size of which will vary depending upon the number of processors in the system. For example, if there are less than 256 processors in a network an 8 bit calling code will be sufficient.

Thereafter, the recognition circuit monitors all of the n transmit lines from the other multiple drop links in parallel. If the processor's calling code appears on any of these lines, the recognition circuit will raise the interrupt request (IRQ) output and also place the binary representation of the line on which the calling code was transmitted onto the caller output, for example 16E. In this way, the processor not only knows its attention is being requested but it knows who is making the request.

The IRQ output is coupled to the processor's existing interrupt request line. By enabling this interrupt line, the processor is signalled when some other processor wants to establish a connection with it and as stated before, the identity of the caller is given by the code on the caller lines.

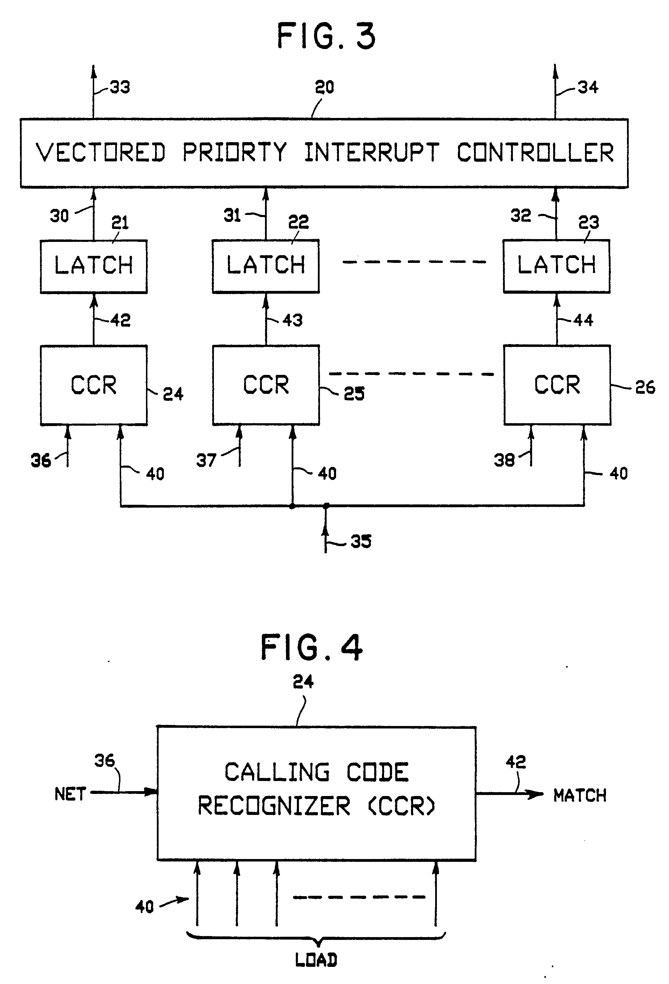

Using this recognition circuit, requests for connections are recognized immediately after the calling code is sent. Thus, at most a time of log n, which is the time required to transmit the calling code, is needed for connection establishment. Referring again to FIG. 3, recognition circuit 16 is comprised of a Vectored Priority Interrupt Controller 20 which has caller 34 and interrupt requests outputs 33 as its outputs. It in turn receives signals from a plurality of n latches 21, 22, and 23 where n is the number of processors in a network which are in turn coupled to calling code recognizing circuits (CCR) 24, 25 and 26 which have as their input the calling code received from the processor and lines from each of the multi-drop links connected to other processors in the network from which it receives messages.

In operation calling code recognition circuits 24, 25 and 26 constantly monitor their network input lines. When a signal is received, it is compared to the calling code signal at the load inputs. If the signal received from the transmit line and the signal in the calling code match one another, a signal corresponding to the number of the transmit line and thus the number of the processor from which the message has been received is placed into, for example, latch 21. Latch 21 serves as a buffer or memory in which the identification of the processor sending the message is stored.

Calling codes are chosen in such a manner as to distinguish them from any other type of data transmitted. This is easily achieved, for example, by beginning and ending the calling code by a bit pattern that the communication protocol excludes from the course of normal communication. For example, common practice for many communication protocols (e.g., SDLC) distinguishes particular patterns as signalling the beginning and end of a "packet" and insures that these patterns are transmitted only for signalling this situation.

Vectored Priority Interrupt Controller 20, which may be a AMD 2914 as manufactured by Advanced Micro Devices, serves to arbitrate priorities in the case where a processor receives messages from more than one other processor at the same time. Vectored Priority Interrupt Controller 20 gives priority to signals received on its inputs in a predetermined order. Thus if a signal requesting communication with processor 10 is received on transmit lines 1 and 2 at the same time, the Priority Interrupt Controller may be wired so that signals received at its inputs 30 are given priority over signals received at input 31 (which in turn are given priority over signals received at input 32). Vectored Priority Interrupt Controller will then do two things after any priority has been resolved, the first, as already described, is to provide the vector or identification of the caller at output 34 to the processor and the second is to simultaneously raise the interrupt request line on output 33 to the processor so that it knows its attention is being requested.

Refer now to FIG. 4, in which calling code recognizer 24 is shown. Each of calling code recognizers 24, 25 and 26 have identical structures. As stated above, calling code recognizer 24 recognizes a particular calling code which is loaded in at its load inputs 40 from the processor it is serving, in this instance processor 10. The code to be recognized is loaded into the CCR 24 through its load lines when the system is initialized. Thereafter it continuously monitors a transmit line which is coupled to line 36 and raises a signal on line 42 whenever a match is made.

One calling code recognizer is assigned to each transmit line. Thus, for example, in a system having eight processors there will be eight recognition circuits and each of the eight recognition circuits will include eight calling code recognizers. Such a network would contain a total of sixty-four calling code recognizers.

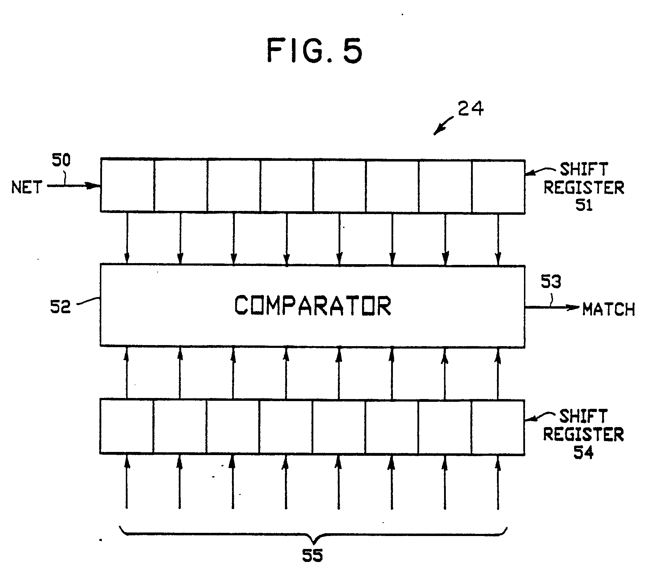

Refer now to FIG. 5 in which a more detailed drawing showing the structure of calling code recognition circuit 24 is shown. Calling code recognizer 24 receives serial input signals from the network on line 50 which are in turn loaded into shift register 51 one bit at a time. As shown in FIG. 5, shift register 51 includes eight cells to hold an eight bit number. It will be apparent, however, to those skilled in the art, that any length binary number may be chosen as long as it is sufficient to contain distinct codes for each and every processor transmit line in the network.

The value loaded into shift register 51 is then in turn loaded into comparator 52. Register 54 receives, on input 55, a binary number from the processor previously referred to as a calling code. Comparator 52 then compares the calling code in register 54 to the value in register 51. When the two registers are the same, comparator 52 raises a match signal on line 53. Since each input 50 of the calling code recognizer is tied to one of the transmit lines of the multiple-drop network by using one calling code recognition circuit per transmit line, all transmit lines may be monitored in parallel.

The match signal is stored in latch 21 of FIG. 3. The latch retains the signal until it is subsequently reset by the processor.

After the interrupt has been serviced by, for example, processor 10, a connection is established with the processor requesting attention.

The latches may be reset by the processor, either individually or all at once. All latches could be reset, for example, when the processor becomes available for connection and all other processors must compete anew for a connection. However, only resetting all latches immediately after establishing a connection, the processor can retain requests for connection made while it was busy. Resetting latches individually permits a servicing of requests in a first in-first out (FIFO) fashion, for example. Various protocols can be adopted as will be apparent to those skilled in the art.

In summary, an apparatus for establishing connections for processors between processors in a distributed system of processors connected by a multiple multi-drop network has been described.

**Claims**

1. An apparatus for establishing communication paths between any of n processors in a multiple multidrop network having n multi-drop links, where n is an integer, said apparatus comprising:
n recognition circuit means each associated with one of said n processors,
for comparing signals received from other processors uniquely associated with one of each of said n processors on said multidrop links to a calling code, and for generating an interrupt request to said associated processor if said calling code matches said signal received on said multidrop lines, and for further providing said identification signal to said associated processor.

2. The apparatus according claim 1 wherein said recognition circuit means comprises:
inputs coupled to multidrop transmit links from processors with which it is not associated,
an input coupled to said associated processor for receiving a calling code therefrom,
a caller output coupled to said processor for providing an identifier of a processor calling said associated processor, and
an interrupt request output for requesting the attention of said associated processor.

3. The apparatus according to claim 2 wherein said recognition circuit compares said signals received on said multidrop links to said calling code, and signals an interrupt request on said interrupt request output if said caller code matches said signal received from said transmit lines, and further provides said identification signal on said caller output.

4. The apparatus according to claim 3 wherein said recognition circuit further comprises:
n calling code recognition circuit means having a first input coupled to said transmit line of said non-associated processors for receiving signals therefrom, a second input coupled to said processor to receive said calling code therefrom, and an output from providing said signal identifying said processor calling said associated processor;
latch means coupled to said calling code recognition circuit for storing said identifier and for providing said stored identifier at an output thereof; and
vectored priority interrupt controller means having prioritized inputs each coupled to one of said outputs of said latches, and further having an interrupt request line coupled to said processors interrupt request input for signalling said process or when a match has been made by said calling code recognition circuit and a vector output for providing said identifier to said processor.

5. The apparatus according to claim 4 wherein said calling code recognition circuit comprises:
shift register means coupled to said first input for receiving serial data therefrom, and a plurality of outputs for providing said serial data in a parallel format of predetermined width;

register means coupled to said second input for storing said associated processor calling code; and comparator means coupled to said shift register means output and said register means for providing said match signal when said signal said calling code matches the content of said shift register.

6. The apparatus according to claim 3 wherein said latch is reset by said processor after a connection has been established to a calling processor.

# FIG.1

## PRIOR ART

EP 0 306 886 A2

# FIG.2

EP 0 306 886 A2

# FIG. 3

# FIG. 4

# FIG. 5